# EUROPÄISCHE PATENTANMELDUNG

(11) **EP 3 799 452 A1**
(43) Veröffentlichungstag der Anmeldung: **31.03.2021**
(21) Anmeldenummer: 20195879.0
(22) Anmeldetag: 14.09.2020
(51) Int. Cl.: H04W 4/80, H04L 29/08, D06F 33/00, D06F 34/05, D06F 34/08, D06F 34/10, D06F 34/14, H04W 4/38, H04W 4/70, H04W 24/00, H04L 12/24

(54) **ELEKTRONISCHES GERÄT, VORZUGSWEISE HAUSHALTSGERÄT**

(30) Priorität: 30.09.2019 DE 102019126231
(71) Anmelder: Miele & Cie. KG, 33332 Gütersloh (DE)
(72) Erfinder: Dahlke, Dirk, 33378 Rheda-Wiedenbrück (DE)

(57) **Zusammenfassung**

Die Erfindung betrifft ein elektronisches Gerät (1), vorzugsweise ein Haushaltsgerät (1), mit wenigstens einer Informationseinheit (2), welche ausgebildet ist, wenigstens eine Information des elektronischen Gerätes (1) zu speichern und einer Ausleseeinheit (3) zur Verfügung zu stellen. Das elektronische Gerät (1) ist dadurch gekennzeichnet, dass die Informationseinheit (2) ausgebildet ist, unabhängig von einer elektrischen Versorgung des elektronischen Gerätes (1) die wenigstens eine Information der Ausleseeinheit (3) zur Verfügung zu stellen.

## Beschreibung

Die Erfindung betrifft ein elektronisches Gerät, vorzugsweise ein Haushaltsgerät, nach dem Oberbegriff des Patentanspruchs 1.

Elektronische Geräte weisen üblicherweise Daten auf, um den Hersteller, den Gerätetyp, die Geräteserie, das Baulos und dergleichen des elektronischen Gerätes anzugeben bzw. zu identifizieren. Derartige elektronische Geräte können z.B. Unterhaltungsgeräte wie z.B. Fernseher und dergleichen sowie insbesondere Haushaltsgeräte wie z.B. Waschmaschinen, Waschtrockner, Wäschetrockner, Staubsauger, Kochfelder, Dampfgarer, Mikrowellen, Backöfen sowie Kombigeräte hiervon und dergleichen sein.

Diese Daten sind üblicherweise an einer Stelle des Gehäuses des Gerätes angeordnet, wo sie beim bestimmungsgemäßen Gebrauch des Gerätes optisch dem Benutzer nicht störend auffallen jedoch bei Bedarf von ihm gefunden und optisch abgelesen werden können. Diese Informationen können für den Benutzer hilfreich sein, um das Gerät z.B. zur Zuordnung einer Betriebsanleitung, zur Zuordnung von Verbrauchsteilen wie z.B. Staubsaugerbeuteln, zur Zuordnung von Zubehörteilen wie z.B. einem entnehmbaren Wassertank eines Dampfgarers sowie zur Beschaffung von Ersatzteilen wie z.B. einer Dichtung einer Waschmaschine eindeutiger zu identifizieren als dies häufig über die Gerätebezeichnung möglich ist. Derartige Daten können als Gerätedaten oder als Maschinendaten bezeichnet werden.

Zum Betrieb derartiger Geräte können Parameter erforderlich sein, welche werksseitig im Rahmen der Herstellung eingestellt worden sein und bzw. oder sich im Laufe der Verwendung des Gerätes verändern werden können. Diese erlauben eine einfachere und flexiblere Anpassung des bestimmungsgemäßen Betriebs des Gerätes als dies über feste Vorgaben möglich ist. Beispielsweise kann eine Steuerung des derartigen elektronischen Gerätes gespeicherte Parameter aufweisen, welche den Betrieb des Gerätes bzw. einzelner Komponenten des Gerätes beeinflussen können. Derartige Daten können als Geräteparameter oder als Maschinenparameter bezeichnet werden.

Während des Betriebs eines derartigen elektronischen Gerätes können Fehlfunktionen und bzw. oder Störungen auftreten. Dies kann z.B. bei einem Fernseher z.B. eine gestörte WLAN-Verbindung sein. Bei anderen Geräten können dies Störungen beweglicher Komponenten wie z.B. einer Wäschetrommel und dergleichen sein. Auch können die Bedienelemente eines derartigen Gerätes nicht zum bestimmungsgemäßen Betrieb führen. Derartige Fehler, Fehlfunktionen bzw. Störungen können üblicherweise von dem Gerät zumindest teilweise selbst erkannt und in Form einer Fehlermeldung z.B. über ein Anzeigeelement des Gerätes einem Benutzer mitgeteilt werden. Gleichzeitig können derartige Fehlermeldungen und hiermit im Zusammenhang stehende Informationen wie z.B. die aktuellen Zustände relevanter Komponenten wie insbesondere die Messdaten relevanter Sensoren sowie die Zustände relevanter Antrieb und dergleichen zusammen mit der Fehlermeldung gespeichert werden. Derartige Daten können als Fehlerdaten bezeichnet werden. Die Fehlerdaten und die Fehlermeldungen können in einem Fehlerspeicher des Gerätes gespeichert werden, welcher üblicherweise ein Bestandteil einer Steuerungseinheit des Gerätes ist.

Tritt nun ein Fehler bei einem derartigen Gerät auf, kann es erforderlich sein, dass der Benutzer wenigstens die Gerätedaten und die Fehlermeldung optisch ablesen kann, um eine Bedienungsanleitung, eine Hilfeseite im Internet oder auch einen Kundendienst telefonisch oder per Nachricht zu konsultieren und dort basierend auf wenigstens den Gerätedaten und der Fehlermeldung nach einer Lösung zu suchen bzw. zu fragen. Ohne eine Eingrenzung des Fehlers aufgrund von Gerätedaten und Fehlermeldung ist eine derartige Lösungssuche üblicherweise nicht aussichtsreich.

Hat der Fehler jedoch zu einem Ausfall des Anzeigeelements der Fehlermeldung oder sogar zu einem vollständigen Ausfall des Gerätes geführt, so steht wenigstens die Fehlermeldung dem Benutzer nicht zur Verfügung. Der Benutzer kann üblicherweise somit die Ursache des Fehlers gar nicht selbst ergründen und ist auf einen Kundendienst angewiesen, mit dem ein Termin vor Ort vereinbart bzw. zu dem das Gerät gebracht werden muss. Dann kann der Kundendienst ggfs. über eine Schnittstelle die Fehlermeldung sowie ggfs. die Fehlerdaten und die Geräteparameter auslesen und auswerten. Dies kann jeweils den Aufwand der Reparatur erhöhen sowie die Reparatur verzögern, so dass das Gerät in dieser Zeit vom Benutzer nicht verwendet werden kann.

Steht jedoch aufgrund des Fehlers der Inhalt des Fehlerspeichers dem Kundendienst nicht zur Verfügung, so kann auch der Kundendienst den Fehler nicht auf diese Art und Weise erkennen. Dies kann neben der Fehlermeldung und der Fehlerdaten auch für die Geräteparameter gelten. Dieser Fall kann bei einem vollständigen Ausfall des Gerätes sowie bei einem Stromausfall am Ort des Betriebs des Gerätes auftreten aber auch bei einer Störung einer Schnittstelle wie z.B. einem Anschluss z.B. der Steuerungseinheit des Gerätes, welche für derartige Zugriffe des Kundendienstes vorgesehen ist. Dies kann dazu führen, dass dem Fehler auf diese Art und Weise gar nicht nachgegangen und das Gerät gar nicht mehr, zumindest nicht wirtschaftlich, repariert werden kann.

Der Erfindung stellt sich somit das Problem, ein elektronisches Gerät und insbesondere ein Haushaltsgerät der eingangs beschriebenen Art bereitzustellen, so dass die Möglichkeiten des Auslesens von Gerätedaten, von Geräteparametern, von Fehlermeldungen und bzw. oder von Fehlerdaten verbessert und bzw. oder vereinfacht werden können. Insbesondere sollen Gerätedaten, Geräteparameter, Fehlermeldungen und bzw. oder Fehlerdaten auch im ausgeschalteten und bzw. oder im ausgefallenen Zustand des elektronischen Gerätes ausgelesen werden können. Zumindest soll eine Alternative zu bekannten derartigen elektronischen Geräten bereitgestellt werden.

Erfindungsgemäß wird dieses Problem durch ein elektronisches Gerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein elektronisches Gerät, vorzugsweise ein Haushaltsgerät, mit wenigstens einer Informationseinheit, welche ausgebildet ist, wenigstens eine Information des elektronischen Gerätes zu speichern und einer Ausleseeinheit zur Verfügung zu stellen.

Das erfindungsgemäße elektronische Gerät ist dadurch gekennzeichnet, dass die Informationseinheit ausgebildet ist, unabhängig von einer elektrischen Versorgung des elektronischen Gerätes die wenigstens eine Information der Ausleseeinheit zur Verfügung zu stellen. Mit anderen Worten ist die Informationseinheit erfindungsgemäß in der Lage die wenigstens eine Information des elektronischen Gerätes unabhängig von dessen Betrieb, Betriebsfähigkeit bzw. Stromversorgung zur Verfügung zu stellen. Dies kann beispielsweise über einen elektronischen Datenspeicher mit eigener Stromversorgung oder durch einen nicht-flüchtigen elektronischen Datenspeicher realisiert werden, wie weiter unten näher erläutert werden wird.

In jedem Fall kann auf diese Art und Weise die wenigstens eine Information auch dann vom elektronischen Gerät nach außen hin einer Ausleseeinheit wie z.B. einem Smartphone oder einem Tablet zur Verfügung gestellt werden, wenn das elektronische Gerät selbst gar nicht aktiv ist. Dies kann der Fall sein, falls das elektronische Gerät teilweise oder vollständig aufgrund eines Fehlers ausgefallen ist. Dies kann ebenfalls bei einem Stromausfall der Fall sein. Auch kann die wenigstens eine Information ausgelesen werden, ohne dass elektronische Gerät hierzu betrieben, z.B. einzuschalten oder aus einem Ruhezustand in einen Betriebszustand versetzen zu müssen. Hierdurch kann die wenigstens eine Information z.B. auch in einem verpackten Zustand des elektronischen Gerätes z.B. bei der Lagerung, beim Transport und dergleichen oder ggfs. sogar schon in der Montage zur Verfügung gestellt werden. Dies kann es u.a. einem Benutzer jeweils ermöglichen, die wenigstens eine Information des elektronischen Gerätes einfacher und ggfs. überhaupt erhalten zu können.

Die wenigstens eine Information kann im einfachsten Fall eine Gerätedateninformation wie z.B. der Hersteller, der Gerätetyp, die Geräteserie, das Baulos und dergleichen des elektronischen Gerätes sein. Derartige Informationen sind üblicherweise bisher lediglich auf einem entsprechenden Typenschild oder dergleichen außen auf dem Gerät angeordnet und dies meist an weniger einfach und direkt für den Benutzer zugänglichen Stellen, um den optischen Eindruck des Gerätes für den Benutzer möglichst wenig bis gar nicht zu stören. Daher kann es mühsam für den Benutzer sein, diese Informationen zu finden und optisch abzulesen. Wird somit wenigstens eine Gerätedateninformation erfindungsgemäß von der Informationseinheit gespeichert und der Ausleseeinheit zur Verfügung gestellt, so kann der Aufwand und die Mühe für den Benutzer, an diese Information zu gelangen, reduziert werden. Auch kann diese Information nicht nur während des Betriebs bzw. bei einem funktionsfähigen Gerät zur Verfügung gestellt werden sondern auch im Falle einer Funktionsstörung bzw. eines Fehlers des elektronischen Gerätes sowie von einem stromlosen bzw. ausgeschalteten elektronischen Gerät. Ferner kann die Gerätedateninformation auch elektronisch von der Ausleseeinheit ausgelesen und z.B. einem Kundendienst, einer Hilfeseite im Internet, einer Software der Ausleseeinheit und dergleichen zur Verfügung gestellt werden, um den Benutzer bei einem Bestellvorgang eines Verbrauchsteils, eines Zubehörteils oder eines Ersatzteils sowie bei einer Fehlerbehebung des elektronischen Gerätes zu unterstützen.

Die wenigstens eine Information kann zusätzlich oder alternativ auch wenigstens eine Fehlermeldung aufweisen, welche von der Ausleseeinheit auch dann von der Informationseinheit ausgelesen werden kann, wenn das elektronische Gerät einen Fehler bzw. eine Fehlfunktion aufweist und ggfs. gar nicht mehr betrieben werden kann, so dass auch die Fehlermeldung von dem elektronischen Gerät selbst bzw. von dessen Steuerungseinheit nicht mehr zur Verfügung gestellt werden kann. Dies kann es für den Benutzer komfortabler machen, die Fehlermeldung über die Ausleseeinheit zu erhalten als diese optisch selbst ablesen und ggfs. handschriftlich notieren zu müssen. Ist das Gerät ausgefallen, kann die Fehlermeldung überhaupt nur über die Ausleseeinheit ausgelesen werden, so dass die Fehlermeldung nur auf diesem Wege noch ausgelesen werden kann. Letzteres kann eine Reaktion auf die Fehlermeldung überhaupt erst ermöglichen, falls auch ein Kundendienst die Fehlermeldung nicht auf anderem Wege erhalten kann. In jedem Fall kann es für den Benutzer komfortabler sein, die Fehlermeldung über die Ausleseeinheit zu erhalten und wie zuvor beschrieben einem Kundendienst, einer Internetseite oder einer Software des Ausleseeinheit zur Verfügung stellen zu können, um den Benutzer bei der Suche nach der Ursache des Fehlers und dessen Lösung zu unterstützen.

Vorteilhaft ist hierbei auch, dass die wenigstens eine Information des elektronischen Gerätes auch zusätzlich zur Fehlermeldung die entsprechenden Fehlerdaten wie z.B. Zustände von Sensoren und bzw. oder von Antrieben und dergleichen aufweisen kann. Dies kann ebenso für Geräteparameter gelten. Diese weiteren Informationen können insbesondere einen Kundendienst bei der Behebung des Fehlers sehr wirkungsvoll unterstützen, so dass die Reparatur überhaupt erst ermöglicht bzw. beschleunigt werden und kostengünstiger ausfallen kann.

Die Informationseinheit kann vorzugsweise als Transponder und insbesondere als RFID-Transponder (Radio-Frequency Identification) umgesetzt werden, was vergleichsweise kostengünstig und bzw. oder platzsparend sein kann. Die Informationseinheit kann vorzugsweise zu einer Nahfeldkommunikation (NFC - Near Field Communication) in der Lage sein, so dass auf eine kurze Entfernung eine drahtlose Verbindung zu der Ausleseeinheit hergestellt werden kann, um die wenigstens eine Information von der Informationseinheit der Ausleseeinheit zur Verfügung stellen zu können. Dies kann den Aufwand der Kommunikation zwischen Informationseinheit und Ausleseeinheit gering halten und entsprechend platzsparend und bzw. oder kostengünstig umgesetzt werden.

Gemäß einem Aspekt der Erfindung weist die Informationseinheit wenigstens ein Speicherelement auf, welches ausgebildet ist, die wenigstens eine Information zu speichern, und die Informationseinheit weist ein Energiespeicherelement auf, welches ausgebildet ist, das Speicherelement elektrisch zu versorgen. Das Energiespeicherelement kann ein Akkumulator sein, welcher von dem elektronischen Gerät aufgeladen werden kann, um bei einem stromlosen Zustand des Gerätes das Speicherelement der Informationseinheit elektrisch zu versorgen, so dass dessen gespeicherte Daten der Ausleseeinheit zumindest für einen längeren Zeitraum zur Verfügung gestellt werden können. Dies kann die Umsetzung der zuvor beschriebenen Funktionen ermöglichen. Alternativ kann auch ein Kondensator als Energiespeicherelement verwendet werden.

Gemäß einem weiteren Aspekt der Erfindung weist die Informationseinheit wenigstens ein nicht-flüchtiges Speicherelement auf, welches ausgebildet ist, die wenigstens eine Information zu speichern. Unter einem nicht-flüchtigen Speicherelement wird ein elektronischer Speicherbaustein wie z.B. ein EEPROM (electrically erasable programmable read-only memory) verstanden, dessen gespeicherte Informationen elektrisch gelöscht werden können. Da lediglich das Beschreiben, d.h. das Speichern, von Information auf einem nicht-flüchtigen Speicherelement elektrische Energie erfordert, jedoch die gespeicherten Informationen selbst kein elektrische Energie benötigen, um erhalten zu bleiben, kann die wenigstens eine gespeicherte Information auch im stromlosen Zustand des elektronischen Gerätes von der Informationseinheit gespeichert bleiben. Dies ist über längere Zeiträume möglich, so dass z.B. Gerätedateninformationen auch über die Dauer eines längeren Versands bzw. einer längeren Lagerung des elektronischen Gerätes erhalten bleiben können. Dies kann insbesondere ohne die Notwendigkeit eines eigenen Energiespeicherelements der Informationseinheit erfolgen, was die Umsetzung einfacher, platzsparender und bzw. oder kostengünstiger machen kann.

Gemäß einem weiteren Aspekt der Erfindung weist die Informationseinheit wenigstens ein Antennenelement auf, welches ausgebildet ist, die wenigstens eine Information drahtlos der Ausleseeinheit zur Verfügung zu stellen. Auf diese Art und Weise kann eine drahtlose Kommunikation zwischen der Informationseinheit über dessen Antennenelement zu der Ausleseeinheit bzw. zu dessen Antennenelement erfolgen. Dies kann das Auslesen der wenigstens einen Information beschleunigen und insbesondere für den Benutzer vereinfachen, da der Benutzer keine kabelgebundene Verbindung von der Ausleseeinheit zu der Informationseinheit herstellen und diese nach dem Auslesen wieder beenden muss.

Gemäß einem weiteren Aspekt der Erfindung weist die wenigstens eine Information wenigstens eine Gerätedateninformation des elektronischen Gerätes auf. Dies kann die Nutzung dieser Informationen wie zuvor beschrieben ermöglichen.

Gemäß einem weiteren Aspekt der Erfindung weist die wenigstens eine Information wenigstens einen Geräteparameter des elektronischen Gerätes auf. Dies kann die Nutzung dieser Informationen wie zuvor beschrieben ermöglichen.

Gemäß einem weiteren Aspekt der Erfindung die wenigstens weist eine Information wenigstens eine Fehlermeldung und bzw. oder wenigstens eine Fehlerdateninformation des elektronischen Gerätes auf. Dies kann die Nutzung dieser Informationen wie zuvor beschrieben ermöglichen.

Gemäß einem weiteren Aspekt der Erfindung weist das elektronische Gerät eine Steuerungseinheit auf, welche ausgebildet ist, die wenigstens eine Information der Informationseinheit zur Verfügung zu stellen, und die Informationseinheit weist wenigstens ein Anschlusselement auf, welches ausgebildet ist, die Informationseinheit signalübertragend mit der Steuerungseinheit zu verbinden. Auf diese Art und Weise kann die Informationseinheit mit der Steuerungseinheit des elektronischen Gerätes signalübertragend verbunden werden, um insbesondere sich im Laufe des Betriebs des elektronischen Gerätes ändernde Informationen wie z.B. Geräteparameter und insbesondere Fehlermeldungen und bzw. oder Fehlerdaten erhalten zu können. Dies kann die Umsetzung der zuvor beschriebenen Funktionen ermöglichen oder zumindest begünstigen. Das Anschlusselement kann hierzu vorzugsweise als drahtgebundene Schnittstelle umgesetzt werden, was eine sichere Datenübertragung mit geringem Aufwand ermöglichen kann. Alternativ kann jedoch auch eine drahtlose Datenübertragung an dieser Stelle erfolgen, was eine entsprechende Verkabelung vermeiden kann. Auch kann hierdurch ein ggfs. abzudichtender Durchbruch durch ein Gehäuse des elektronischen Gerätes vermieden werden, falls sich die Steuerungseinheit wie üblich im Inneren des Gerätes befindet und die Informationseinheit außerhalb des Gehäuses des Gerätes z.B. im Bereich einer Blende des Gerätes angeordnet werden soll.

Gemäß einem weiteren Aspekt der Erfindung ist die Steuerungseinheit ausgebildet, die wenigstens eine Information beim Eintritt einer Änderung der wenigstens einen Information zu aktualisieren. Eine derartige Änderung kann eine Änderung eines Betriebszustands des elektronischen Gerätes sein, was z.B. zu einer Veränderung der Geräteparameter führen kann, welche dann aktualisiert seitens der Informationseinheit gespeichert werden können. Eine derartige Änderung kann jedoch auch das Auftreten eines Fehlers bzw. einer Fehlfunktion sein, welche ein unverzügliches Speichern der entsprechenden Fehlermeldung und bzw. oder der entsprechenden Fehlerdaten seitens der Informationseinheit auslösen kann. Dies kann es ermöglichen, dass bei einem Ausfall des elektronischen Gerätes möglichst viele bis alle relevante Informationen noch rechtzeitig von der Informationseinheit aufgenommen und gespeichert werden können, bevor dies aufgrund des Fehlers des elektronischen Gerätes nicht mehr möglich ist. Diese Informationen können dann erfindungsgemäß trotz des Ausfalls des elektronischen Gerätes über die Informationseinheit von der Ausleseeinheit ausgelesen und genutzt werden, wie zuvor beschrieben.

Gemäß einem weiteren Aspekt der Erfindung ist die Informationseinheit hinter einer Blende des elektronischen Gerätes angeordnet. Unter einer Blende ist eine Abdeckung des Gehäuses des elektronischen Gerätes zu verstehen, welche dem Benutzer zugewandt angeordnet ist und üblicherweise Anzeige- und bzw. oder Bedienelemente des elektronischen Gerätes aufweist. Da dieser Teil des Gehäuses des Gerätes üblicherweise vom Benutzer zur Bedienung des elektronischen Gerätes verwendet wird, ist die Blende für den Benutzer gut, einfach und direkt zugänglich, so dass die dortige Anordnung der Informationseinheit das Auslesen von Informationen mittels der Ausleseeinheit begünstigen kann. Auch kann es für den Benutzer sehr intuitiv sein, Informationen mittels der Ausleseeinheit dort auszulesen.

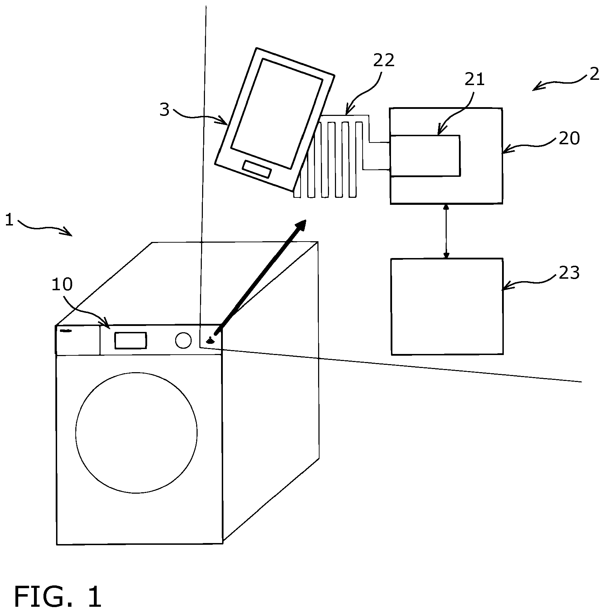

Ein Ausführungsbeispiel der Erfindung ist in der Zeichnung rein schematisch dargestellt und wird nachfolgend näher beschrieben. Es zeigt
- Figur 1: eine perspektivische Darstellung eines elektronischen Gerätes als Haushaltsgerät in Form einer Waschmaschine mit einer vergrößerten Ansicht des Auslesens von Informationen mittels einer Ausleseeinheit von einer Informationseinheit der Waschmaschine.

Als Beispiel eines erfindungsgemäßen elektronischen Gerätes 1 sei ein Haushaltsgerät 1 in Form einer Waschmaschine 1 betrachtet, welche einem Benutzer zugewandt eine Blende 10 als Teil ihres Gehäuses aufweist. Unmittelbar hinter der Blende 10 ist eine Informationseinheit 2 angeordnet, welche in der Figur 1 rechts oben vergrößert schematisch dargestellt ist.

Die Informationseinheit 2 ist als Transponder 2 realisiert, was beispielsweise über einen RFID-Transponder 2 erfolgen kann. Der Transponder 2 weist ein Steuerungselement 20 in Form eines Chips 20 auf, welche die Funktionen des Transponders 2 steuern kann. Das Steuerungselement 20 weist ein Speicherelement 21 in Form eines nicht-flüchtigen Speicherelements 21 auf, welches als EEPROM 21 umgesetzt sein kann. Des Weiteren weist der Transponder 2 ein Antennenelement 22 sowie ein Anschlusselement 23 auf, welche jeweils signalübertragend mit dem Steuerungselement 20 verbunden sind.

Das Anschlusselement 23 stellt eine signalübertragungsfähige festverdrahtete serielle Schnittstelle mit einer Steuerungseinheit (nicht dargestellt) der Waschmaschine 1 dar, so dass Informationen wie insbesondere Gerätedaten, Geräteparameter sowie Fehlermeldungen und Fehlerdaten von der Steuerungseinheit der Waschmaschine 1 insbesondere im Fall einer Veränderung dieser Informationen wie z.B. beim Auftreten eines Fehlers bzw. einer Fehlfunktion der Waschmaschine 1 an das Steuerungselement 20 bzw. an dessen Speicherelement 21 übertragen und dort gespeichert werden können. Aufgrund der Verwendung eines EEPROM 21 als Speicherelement 21 des Transponders 2 bleiben diese Informationen dort solange erhalten, bis sie wieder überschrieben werden. Dies ist auch der Fall, falls die Waschmaschine 1 z.B. aufgrund eines Transports, einer Lagerung sowie eines Ausfalls stromlos ist.

Über das Antennenelement 22 des Transponders 2 können die dort gespeicherten Informationen drahtlos nach außerhalb der Waschmaschine 1 zur Verfügung gestellt werden. So kann beispielsweise eine Ausleseeinheit 3 in Form eines Smartphones 3 oder eines Tablets 3 dazu verwendet werden, von einem Benutzer vor die Blende 10 der Waschmaschine 1 gehalten zu werden. Nun kann zwischen dem Tablet 3 und dem Transponder 2 eine drahtlose Verbindung z.B. in Form einer NFC-Verbindung aufgebaut werden, um die auf dem Transponder 2 bzw. in dessen EEPROM 21 gespeicherten Informationen an das Tablet 3 zu übertragen.

Seitens des Tablets 3 können diese Informationen z.B. einem Benutzer angezeigt werden, was übersichtlicher und komfortabler für den Benutzer sein kann als z.B. eine Fehlermeldung von einem Anzeigeelement der Blende 11 des Waschmaschine 1 abzulesen. Auch können auf einem Tablet 3 mehr Informationen dargestellt werden als dies üblicherweise auf einem Anzeigeelement der Blende 10 der Waschmaschine 1 möglich ist.

Ferner kann das Tablet 3 die erhaltenen Informationen z.B. über eine Service-App des Waschmaschinenherstellers mit weiteren Informationen und bzw. oder Service-Angeboten verknüpfen. Beispielsweise kann basierend auf den ausgelesenen Informationen ein passendes Ersatzteil zur Bestellung angeboten werden, falls die Information eine entsprechende Warn- oder Fehlermeldung enthalten. Auch kann basierend auf den Informationen eine Anleitung zur Behebung eines Fehlers bzw. einer Fehlfunktion der Waschmaschine 1 angeboten und hierzu vorzugsweise eine Schritt-für-Schritt Anleitung dargestellt werden. Ggfs. kann auch ein Kontakt mit einem Kundendienst hergestellt und diesem die Informationen zur Verfügung gestellt werden, um z.B. eine Wartung oder eine Reparatur zu beschleunigen und zu vereinfachen. Dies kann dem Kunden den Betrieb, die Wartung und die Reparatur der Waschmaschine 1, insbesondere mit der Unterstützung eines Kundendienstes, erleichtern.

### Bezugszeichenliste (Bestandteil der Beschreibung)

- 1: Elektronisches Gerät; Haushaltsgerät; Waschmaschine
- 10: Blende

- 2: Informationseinheit; Transponder; RFID-Transponder
- 20: Steuerungselement; Chip
- 21: Speicherelement; nicht-flüchtiges Speicherelement; EEPROM
- 22: Antennenelement
- 23: Anschlusselement

- 3: Ausleseeinheit; Tablet; Smartphone

## Patentansprüche

1. Elektronisches Gerät (1), vorzugsweise Haushaltsgerät (1),
mit wenigstens einer Informationseinheit (2), welche ausgebildet ist, wenigstens eine Information des elektronischen Gerätes (1) zu speichern und einer Ausleseeinheit (3) zur Verfügung zu stellen,
**dadurch gekennzeichnet, dass**
die Informationseinheit (2) ausgebildet ist, unabhängig von einer elektrischen Versorgung des elektronischen Gerätes (1) die wenigstens eine Information der Ausleseeinheit (3) zur Verfügung zu stellen.

2. Elektronisches Gerät (1) nach Anspruch 1, **dadurch gekennzeichnet, dass**
die Informationseinheit (2) wenigstens ein Speicherelement (21) aufweist, welches ausgebildet ist, die wenigstens eine Information zu speichern, und
die Informationseinheit (2) ein Energiespeicherelement aufweist, welches ausgebildet ist, das Speicherelement (21) elektrisch zu versorgen.

3. Elektronisches Gerät (1) nach Anspruch 1 oder 2, **dadurch gekennzeichnet, dass**
die Informationseinheit (2) wenigstens ein nicht-flüchtiges Speicherelement (21) aufweist, welches ausgebildet ist, die wenigstens eine Information zu speichern.

4. Elektronisches Gerät (1) nach einem der vorangehenden Ansprüche, **dadurch gekennzeichnet, dass**
die Informationseinheit (2) wenigstens ein Antennenelement (22) aufweist, welches ausgebildet ist, die wenigstens eine Information drahtlos der Ausleseeinheit (3) zur Verfügung zu stellen.

5. Elektronisches Gerät (1) nach einem der vorangehenden Ansprüche, **dadurch gekennzeichnet, dass**
die wenigstens eine Information wenigstens eine Gerätedateninformation des elektronischen Gerätes (1) aufweist.

6. Elektronisches Gerät (1) nach einem der vorangehenden Ansprüche, **dadurch gekennzeichnet, dass**
die wenigstens eine Information wenigstens einen Geräteparameter des elektronischen Gerätes (1) aufweist.

7. Elektronisches Gerät (1) nach einem der vorangehenden Ansprüche, **dadurch gekennzeichnet, dass**
die wenigstens eine Information wenigstens eine Fehlermeldung und/oder wenigstens eine Fehlerdateninformation des elektronischen Gerätes (1) aufweist.

8. Elektronisches Gerät (1) nach einem der vorangehenden Ansprüche, **gekennzeichnet durch**
eine Steuerungseinheit, welche ausgebildet ist, die wenigstens eine Information der Informationseinheit (2) zur Verfügung zu stellen, und
die Informationseinheit (2) wenigstens ein Anschlusselement (23) aufweist, welches ausgebildet ist, die Informationseinheit (2) signalübertragend mit der Steuerungseinheit (11) zu verbinden.

9. Elektronisches Gerät (1) nach Anspruch 8, **dadurch gekennzeichnet, dass**
die Steuerungseinheit ausgebildet ist, die wenigstens eine Information beim Eintritt einer Änderung der wenigstens einen Information zu aktualisieren.

10. Elektronisches Gerät (1) nach einem der vorangehenden Ansprüche, **dadurch gekennzeichnet, dass**
die Informationseinheit (2) hinter einer Blende (10) des elektronischen Gerätes (1) angeordnet ist.
